# EUROPEAN PATENT APPLICATION

(11) **EP 1 724 026 A1**
(43) Date of publication of application: **22.11.2006**
(21) Application number: 06252364.2
(22) Date of filing: 04.05.2006
(51) Int. Cl.: B05D 7/14, B05D 5/08, B05D 5/00

(54) **Temperature dependent transparent optical coatings for high temperature absorption**

(30) Priority: 20.05.2005 US 133607
(71) Applicant: GENERAL ELECTRIC COMPANY, Schenectady, NY 12345 (US)
(72) Inventor: Ackerman, John Frederick, Laramie WY 82070 (US); Harcum, Joseph David, West Chester OH 45069 (US)
(74) Representative: Pedder, James Cuthbert

(57) **Abstract**

A gas turbine engine component (100) having a coating (110) with a temperature dependent transparency is disclosed. The component (100) includes a substrate (120) having an optically absorptive surface (122) and a coating (110) disposed over the substrate 120 that has a reflectivity that is temperature dependent. At temperatures below the glass transition temperature, the coating (110) has a low transparency to incident radiation and is highly reflective, while at higher temperatures, the coating (110) has a high transparency to incident radiation. As a result of the increased transparency at high temperatures, incident radiation passes through the coating (110) and is absorbed by the optically absorptive surface (122) of the substrate (120) underlying the coating (110). At low temperatures, when the coating (110) has a high reflectivity, incident radiation is reflected by the component (100).

## Description

The present invention relates generally to components having variable reflectivity and more particularly to absorptive gas turbine engine components with reflective coatings that have a transparency to incident radiation that is temperature dependent.

Gas turbine engines and other machines often operate under a variety of changing conditions and usually operate for extensive periods of time at high temperatures, resulting in the need to have effective heat transfer mechanisms. Various methods for controlling heat transfer are used. One such method includes optical tailoring of surfaces of the machines and their components. Based on known operating temperatures for a known operating cycle, surfaces of gas turbine engine components or other machines may be desired to have more reflectivity or more absorptivity to reflect or absorb incident radiation while also aiding in the control of heat transfer from or to the components.

A problem arises because many machines, including gas turbine engines, operate at different cycles and at different temperatures over the course of operation. A surface of a machine component that is ideally reflective at one temperature under a particular operating condition may have better thermal qualities if it is more absorptive at a different temperature experienced under a different operating condition.

A variety of optical coatings and surface treatments are available to modify certain surfaces to be more or less reflective and to assist with heat transfer control based on a determination of whether a more reflective or more absorptive surface is desired under a particular operating condition. These coatings include black and white paints, surface roughness treatments, and evaporated or sputtered optical coatings applied to the surfaces of machine components.

These conventional optical tailoring techniques have a fixed optical behavior. For example, a conventional coating such as a smooth layer of platinum or other noble metal applied to a component surface remains reflective regardless of the operating environment, even when it may be desirable from an engineering standpoint for that surface to exhibit absorption at a particular temperature. Thus, if a particular component surface desirably exhibits reflective behavior at one temperature and absorptive behavior at another temperature during ensuing operation, a decision must be made prior to placing the component in service to select an optical coating that provides either a reflective or an absorptive surface under all operating temperatures. Because it is not possible to re-treat internal surfaces of gas turbine engines during operation, gas turbine engine components treated by conventional optical tailoring techniques are likely to exhibit inefficient heat transfer at various points during operation.

Accordingly, it may be desirable to provide a component for use in a gas turbine engine or other machine that has a reflectivity that varies at different operating temperatures, such that at different temperatures, the component's reflectivity changes to provide a desired level of reflectivity or absorption of incident radiation.

The present invention uses a coating whose transparency is temperature dependent. The temperature-dependence of the transparency of the coating, being substantially transparent at high temperatures or temperatures above the coating glass transition temperature and substantially opaque but reflective at temperatures below the glass transition temperature, is used to provide a component that has an emissivity that is temperature dependent.

A component for use in an elevated temperature environment having temperature dependent reflectivity is disclosed. The component comprises a substrate having an optically absorptive surface and a coating disposed over and in contact with the optically absorptive surface of the substrate. The coating has a glass transition temperature and a transparency to incident radiation of greater than about 50% above the coating glass transition temperature and a reflectivity to incident radiation greater than about 50% below the coating glass transition temperature.

A method for optically tailoring a surface of a gas turbine engine component to control heat transfer is also disclosed. The method comprises the steps of providing a component of a gas turbine engine having an optically absorptive surface, coating the optically absorptive surface of the component with a material having a glass transition temperature and providing cooling to a surface of the component opposite the optically absorptive surface. The material used in coating has a higher transparency to incident radiation above the glass transition temperature than below the glass transition temperature, at which lower temperatures the coating is reflective.

An advantage of the present invention is that the component has an emissivity that is temperature dependent. As a result, the component has emissivity and heat transfer properties that vary with the environmental conditions to which it is exposed.

Another advantage of the present invention is that at high temperatures, the component absorbs incident radiation, increasing the amount of heat absorbed and thus the amount of heat transferred from the engine to the bypass stream. Increasing the amount of heat transferred to the bypass stream also decreases the likelihood that the component will absorb sufficient energy to act as a radiation emitter since the removal of heat to the bypass stream will limit the temperature rise of the component. When the component is used in a gas turbine engine in an aircraft, the ability to control the temperature of the component and thereby reduce the emittance of radiation, in particular IR radiation, reduces the ability of certain detection systems to detect the aircraft.

The invention will now be described in greater detail, by way of example, with reference to the drawings, in which:-
Fig. 1 is a schematic representation of a high bypass turbofan gas turbine engine.
Fig. 2 is a schematic representation of a low bypass turbofan gas turbine engine equipped with an augmentor.
Fig. 3 is a schematic representation of the combustor and high pressure turbine sections of a gas turbine engine.
Fig. 4 is a cross-sectional view of a component having variable reflectivity according to an embodiment of the invention.
Fig. 5 is a cross-sectional view of a component having variable reflectivity according to another embodiment of the invention.
Fig. 6 is a cross-sectional view of a component having variable reflectivity according to still another embodiment of the invention.

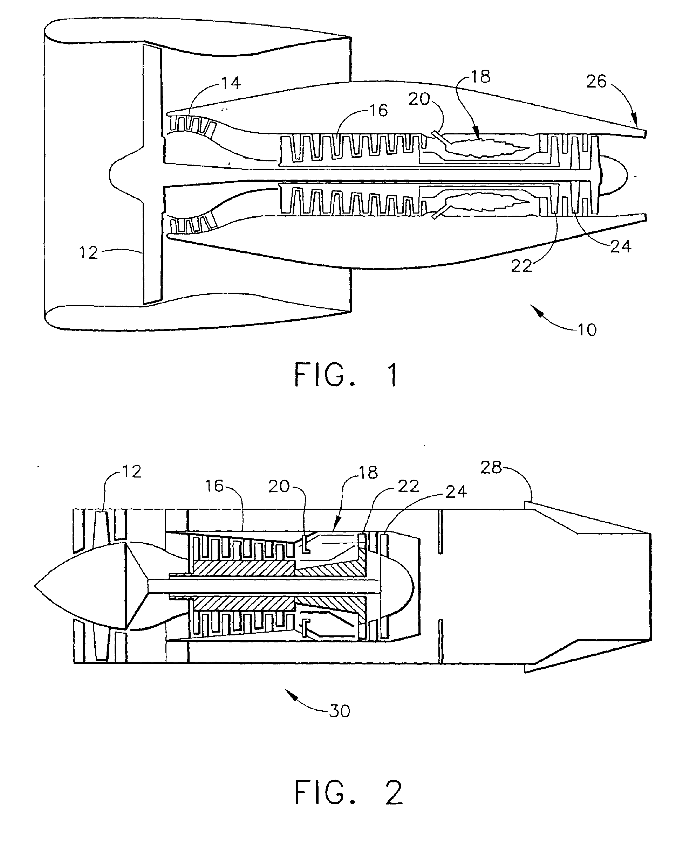

A high bypass aircraft gas turbine engine 10 is shown schematically in Fig. 1. During operation, air is drawn in through the fan 12. A portion of the air bypasses the core of the engine and is used to contribute to the thrust that propels the engine. A portion of the air is compressed in the booster 14 and compressor 16 portions of the engine up to 10-25 times atmospheric pressure, and adiabatically heated to 800° - 1250° F in the process. This heated and compressed air is directed into the combustor 18 portion of the engine, where it is mixed with fuel supplied through a fuel nozzle system 20. The fuel is ignited, and the combustion process heats the gases to temperatures on the order of 3200° - 3400° F. These hot gases pass through the high pressure 22 and low pressure 24 turbines, where rotating discs extract energy to drive the fan and compressor of the engine. The gases then are passed to the exhaust system 26, where they contribute to thrust for aircraft propulsion.

Operation of a low bypass gas turbine engine, shown schematically at 30 in Fig. 2, is similar, except that operational requirements may dictate omission of the booster 14 and addition of an augmentor 28 in the exhaust system. To emphasize the conceptual similarity, the same identification numerals are employed in both figures.

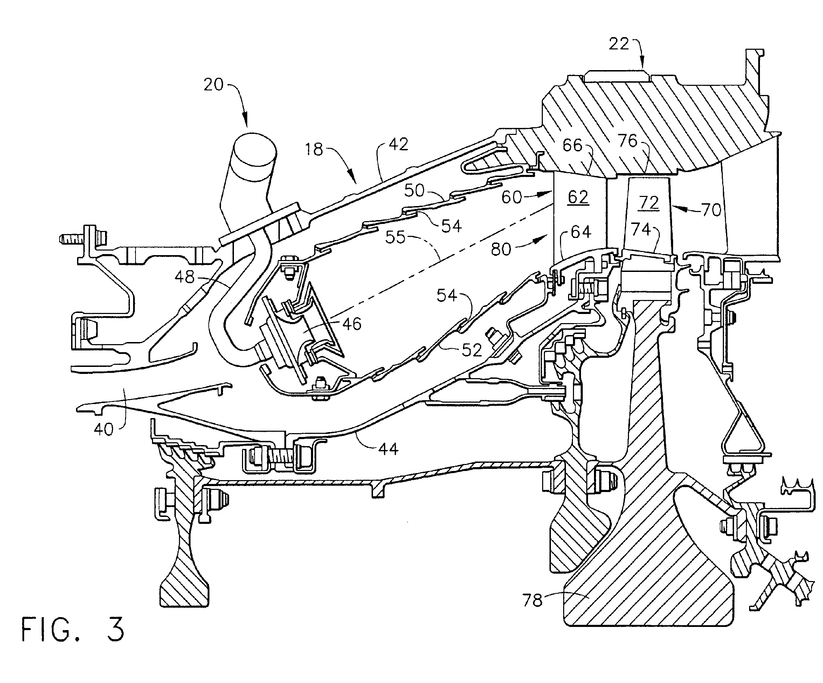

The combustor 18 and high pressure turbine 22 sections typical of such engines 18 as in Fig. 1 or Fig. 2 are shown in greater detail in Fig. 3. Compressed air from the compressor is introduced through a diffuser 40 into an annular cavity defined by outer combustor case 42 and the inner combustor case 44. A portion of the compressed air passes through a swirl nozzle 46, where it is mixed with fuel supplied through a fuel tube 48. The swirl nozzle and fuel tube are components of the fuel nozzle system 20. The fuel/air mixture is self-igniting under normal operating conditions, except for those transient conditions where flame instability or flame-out occurs. The flame is confined and hot gases of combustion are directed toward the turbine by the outer combustor liner 50 and the inner combustor liner 52. These liners are oriented about a central axis 55 and form the gas flow path. Each combustor liner additionally is provided with a plurality of cooling holes 54, through which compressed air supplied by the compressor is forced to pass. Compressed air in annulus between liners 50, 52 and combustor cases 42, 44 provides back side cooling to liners 50, 52 before exiting cooling holes 54. The air passing through the cooling holes provides cooling and also provides a protective layer compressing the thin film boundary layer. The combustor liners 50 and 52 are described as having an inner side, and an outer side.

The hot gases of combustion then leave the combustor and enter the high pressure turbine 22, which may comprise a single stage, as shown in Fig. 3, or multiple stages, each stage being comprised of a substantially stationary nozzle 60 and a rotor 70. For the purposes of this discussion, the turbine is presumed to be of a single stage configuration, but the concepts of the present invention are fully applicable to gas turbines of other configurations and designs with additional turbine stages. The nozzle 60 is comprised of a plurality of vanes 62 disposed between and secured to an inner band 64 and an outer band 66. Vanes 62 are substantially stationary, although they may be capable of rotating about their axes in limited motion in variable guide vane configurations. The turbine nozzle 60 preferably includes a plurality of circumferentially adjoining segments 80 collectively forming a complete 360° assembly. Each segment 80 has two or more circumferentially spaced vanes 62 (one shown in Fig. 3), each having an upstream leading edge and a downstream trailing edge, over which the combustion gases flow. The vanes direct the flow of hot gases from the combustor. As the temperature of the hot gas in the gas flow path can easily exceed the melting point of the materials forming the boundaries of the gas flow path, it is necessary to cool the components forming the flow path. Various methods are used including active cooling which entails first by passing the air coming from the compressor at about 1000° - 1250°F (535° - 675°C) over the outer surfaces of the nozzles, then by using the same air after it passes through cooling holes to direct a thin film of air between the surface of the vanes 62 and the hot gases. The thin film of air forming a boundary layer assists in protecting the vanes 62 from being heated to even higher temperatures by a process referred to as film cooling. Components of at least one turbine stage are often provided with cooling air through cooling holes. Additionally, the surface of the vanes 62 may also be coated with thermal barrier coating systems, which are comprised of a bond coat applied between an underlying superalloy base material and an overlying ceramic layer, to create a thermal barrier coating system that reduces the flow of heat to the substrate material. Reflective materials may also be used to reflect incident radiation away from the component. Although the methods of active cooling and reflection may be used individually, frequently they are used in combination.

The rotor turbine 70 is comprised of a plurality of blades, each having an airfoil section 72 and a platform 74, which are securely attached to the periphery of a rotating disk 78. Important associated structures to support the rotor are not shown. The blades cooperate with a stationary shroud 76 to effect a gas seal between rotor 70 and the stationary components of the engine. Blades are protected with cooling air and coatings in manner similar to the vanes 62.

Downstream of the fuel nozzle 46, the gas flow path is defined by the inner surfaces of the inner combustor liner 52 and the outer combustor liner 50, and portions of the turbine or turbines including the inner and outer bands 64 and 66, the vanes 62, which direct the flow of gas, the airfoil 72, which extracts energy from the hot gas, the shrouds 76, as well as the exhaust system 26 and/or augmentor 28 aft or downstream of the turbine section of the engine. The present invention is specifically applicable to those components which define the gas flow path downstream of the swirl nozzle 46 but upstream of the augmentor 28. Systems for providing cooling air and thermal barrier coating systems are well-known in the gas turbine engine art.

Materials employed in the combustor, turbine and exhaust system sections of aircraft gas turbines are typically high temperature superalloys based on nickel, cobalt, iron or combinations thereof. All of these superalloys are believed to be suitable substrate materials for the present invention. Also, ceramic materials may be employed in the combustor, turbine and exhaust systems sections of an aircraft gas turbine. Such ceramic materials are specifically contemplated for use in the present invention, and may have higher temperature limits than the high temperature superalloys currently used for combustors.

Even for gas turbine engines designed for commercial airliners, gas velocity through the engine may approach the speed of sound. Thus, the total gas residence time in the engine is but a small fraction of a second, during which time air entering the engine through the compressor is mixed with liquid fuel, and combustion of the mixture occurs. As the mixture is combusted to form a gas, heat, including radiant heat, is generated. Even with the most recent advances in cooling measures used in gas turbine engines, such as active cooling controls and advanced thermal barrier coating systems, which reduce the amount and/or rate of heat transferred to components due to convective and conductive heat transfer, the temperatures of the components along the flow path surface are still elevated to very high temperatures. The present invention assists in reducing the amount of heat transferred to these components by radiation transfer.

Exemplary embodiments of the invention are directed to components that may be used as gas turbine engine components and which have reflectivity that is temperature dependent. The component comprises a substrate having an absorptive surface and a coating disposed over the substrate that has a reflectivity/transparency that varies with temperature. As used herein, the term reflectivity shall be used to describe both the reflectivity and the transparency of the coating, which properties vary inversely. A coating having high reflectivity has low transparency, and a coating having low reflectivity has high transparency.

At ambient temperatures, the coating of the present invention has a low transparency, but is greater than 50% reflective, typically highly reflective, such as 90% or more reflective. At low temperatures of operation, below the glass transition temperature of the coating, radiation incident upon the coating is reflected back into the engine, with very little of the radiation being absorbed. This makes the amount of energy in the hot gas stream more energetic, thereby improving the efficiency of the turbine as more energy is available for extraction.

The coating of the present invention does not act as a reflector under all conditions. As the operating temperatures of the engine increase, such as when there is a transient, when more power is required by the pilot, such as during take-off or landing, or, for combat aircraft, when combat situations dictate maximum power, the coating transforms from low transparency (high reflectivity) to high transparency. This characteristic is related to the glass-transition temperature of the coatings of the present invention. Above the glass-transition temperature, the coating is highly transparent.

Because of the power transients discussed above, the temperatures of the hot gas stream are increased, which increases the incident radiation on engine components. Thus, the temperature of the coating also increases. Once the glass transition temperature is exceeded, the coating becomes transparent.

The transparent coating reveals the absorptive surface of the substrate below, and thus the radiation is absorbed by the component, converted to heat, and transferred by heat conduction mechanisms to the cooling bypass flow on the surfaces of the component opposing the hot gas stream. The specific chemical and physical properties of the material underlying the coating is an important aspect of the invention and its operation as discussed below.

As the material underlying the coating is heated, the internal temperature of the material increases. Unless the heat is conducted away from the material, the temperature will continue to rise until it becomes sufficiently hot so as to emit radiation (i.e., black-body radiation), typically infrared (IR) radiation. Cooling is provided to the component below the coating and the incident radiation. Typically the flow is across the back-side of the component opposite the coating, but it is not so limited and may include, for example, cooling channels extending through the component. The flow of air across this back-side surface conducts heat away from the material and prevents the temperature from continuing to increase.

The component comprises a layered material system with the coating having a temperature-dependent transparency as the layer exposed to hot gases of combustion, or high temperatures. Immediately underlying this coating is an absorptive surface. The absorptive surface may be an absorptive coating applied to a substrate or it may be the substrate itself which may be produced to have a highly absorptive surface. When the absorptive surface is itself an absorptive coating applied to the substrate, the substrate may be defined to include the absorptive coating materials overlying the substrate.

When the temperature dependent coating is exposed to hot gases that result in temperatures that raise the coating above the glass transition temperature, as previously noted, the coating becomes transparent to incident radiation, typically IR. The radiation is transmitted through the coating to the component and converted into heat, which heat is transferred away by the cooling bypass flow. The coating additionally can provide environmental protection to the absorptive surface.

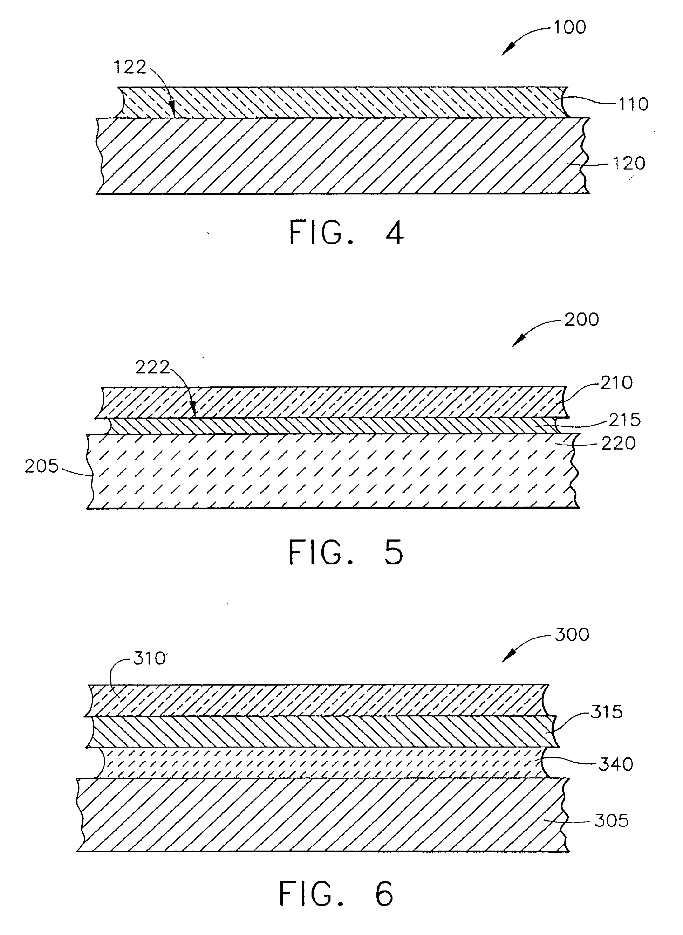

Referring now to Figure 4, a component 100 comprises a substrate 120 having an optically absorptive surface 122 over which a coating 110 is disposed, the coating 110 having a reflectivity that varies with temperature. The coating 110 overlies and contacts the optically absorptive surface 122. The substrate 120 may comprise any dull metallic or other non-reflective material and may be any component of a gas turbine engine. Substrate materials are preferably high temperature superalloys based on nickel, cobalt, iron or combinations thereof. The substrate materials are not so limited and may be a ceramic matrix composite (CMC) material, aluminum or steel for example.

The coating 110 of the present invention is any material that has a transparency to incident radiation that is different at different temperatures and that has a high reflectivity at temperatures below its glass transition temperature, and selection may further depend on the location where the coating to be applied. For example, where the coating 110 is used in an aircraft engine, engine inlets and other areas exposed to relatively lower temperatures may be coated with various fluoropolymers, preferably polytetrafluorethylene. For higher temperature applications, lithium silicate glass, may be used, such as RE-X glass available from General Electric Company of Schenectady, New York for example. However, it will be appreciated that the material of the coating 110 may be any non-absorptive crystallizing glass, as long as the desired material is serviceable at the expected range of temperatures to which the coating will be exposed.

At temperatures below the glass transition temperature, the coating 110 is a diffuse reflector, providing a reflective surface on the component 100 for reflecting heat transfer away from the component 100. The coating 110 reflects at least 50% of incident radiation and preferably reflects at least about 90%, most preferably at least about 95% of incident radiation at temperatures below the glass transition temperature in the frequency region of interest. Because the coating 110 is opaque and reflects the radiation, the underlying absorptive surface 122 absorbs only small amounts of the heat or the radiation. Because the operating temperatures are low, the components are not sufficiently elevated to pose a problem with black-body radiation. Of course, the operating temperatures increase and the temperatures of the components also increase in a corresponding manner. As temperatures increase, at temperatures above the glass transition temperature of the coating 110, the optical properties of the coating 110 change and the coating 110 becomes at least about 50%, typically at least about 60%, transparent, with a low degree of reflection, exposing the optically absorptive surface 122 of the substrate 120 to incident radiation. Preferably the coating 110 becomes highly transparent, permitting up to 90% or more of the incident radiation to pass into and be absorbed by the component 100. When heated above the glass transition temperature, the component 100 becomes a better conductor of heat across the material from the hot surface to a cooler surface according to standard thermodynamic principles, the cooler surface provided by the cooling bypass flow.

The coating 110 may be of any thickness sufficient to provide the desired change in optical properties and thus affect the component's 100 heat transfer properties. Typically, the coating 110 is about 10 mils (0.254 mm) or greater in thickness and is more typically about 20 mils (0.508 mm) thick. Coatings 110 may be applied using any conventional techniques for coating turbine engine parts, such as slurry spraying or plasma spraying.

Incident radiation reflected from the component 100 or absorbed by the component 100 includes heat and electro-magnetic radiation, including infrared, visible and ultraviolet radiation. By absorbing radiation, converting it to heat and transferring the heat away from machinery components by heat transfer, the internal temperatures of the components are lowered, improving the lifetime of the component, particularly in high stress, high temperature environments such as gas turbine engines where components may be subjected to temperatures approaching or above their melting point.

In the absence of effective transfer of incident radiation, radiation is absorbed by the component and converted to heat, causing its internal temperature to increase. If the heat absorbed outpaces heat removed, the components may become a source of radiation emission. For example, the components may emit radiation in the form of infrared electro-magnetic radiation, making the gas turbine engine and any aircraft or other vehicle attached thereto more readily visible to infrared devices. By converting radiation into heat and carrying it away from engine components and into the cooler bypass stream which exits to the atmosphere, the components are less likely to have sufficient energy to be significant sources of radiation emission, reducing its detection signature and decreasing visibility to infrared devices.

In addition to modifying the optical characteristics to provide a change in the reflectivity of the component 100, the coating 110 also serves as an environmental coating over the substrate 120. As previously discussed, gas turbine engine components are typically constructed of high temperature superalloys based on nickel, cobalt, iron or combinations thereof.

It should be appreciated that in some cases, the substrate 120 may not have a surface with a sufficient level of absorption to produce the desired heat transfer characteristics. Thus, the use of an optical coating that is transparent at high temperatures may not result in a major increase in absorption of incident radiation if the underlying substrate does not have an absorptive surface. To overcome this, the substrate may first receive a layer of absorptive material on its surface to produce a compound substrate as shown in more detail with respect to Figure 5.

In Figure 5, a component 200 comprises a compound substrate 220 having an optically absorptive surface 222. The compound substrate 220 comprises a base substrate 205 that underlies a layer of absorptive material 215. The absorptive material may be any material capable of absorbing incident radiation and that can withstand the extreme temperatures experienced in an operating gas turbine engine. For example, the layer of absorptive material 215 may be a plasma-sprayed coating of lanthanum strontium manganate (LSM) or commercially available paints such as black RUSTOLEUM or PYROMARK 2500 paints. Alternatively, an optically absorptive surface 222 could be produced, for example, by chemical etching and oxidation of the base substrate 205.

A coating 210 of a material having an elevated glass transition temperature is applied over the compound substrate 220 to produce the component 200. As discussed with respect to Figure 1, the coating 210 has a high reflectivity at ambient temperatures. When heated to a temperature at or above the glass transition temperature, the coating 210 has a high transparency, such that incident radiation passes through the coating 210, most of which is then absorbed by the optically absorptive surface 222 of the compound substrate 220 and converted to heat, which heat is then carried away from the component 200 by the bypass flow passing over an opposing surface of the component 200.

It should further be appreciated that the layer of absorptive material 215 may be a material having temperature dependent transparency as described in our U.S. Application No. 11/133,628. In this manner, the coating 210 is reflective until its glass transition temperature, at which point the coating 210 becomes primarily transparent and incident radiation passes through the coating 210 and is absorbed by the component 200 via the layer of absorptive material 215. As the absorption of radiation causes the temperature to further increase, the glass transition temperature of the layer of absorptive material 215 is also reached. Thus, the layer of absorptive material 215 becomes transparent revealing the reflective surface of the base substrate 205 and reflecting the heat back into the gas stream. In this manner, the invention may be used in a manner to absorb and transfer heat to the bypass flow only over a specified range of temperatures, which may be advantageous in certain applications.

When exemplary embodiments of the invention are used as components of a machine in a high temperature environment, such as may be experienced in a gas turbine engine, for example, it may be desirable to also.apply a thermal barrier coating (TBC) to the components as shown in Figure 6. A component 300 includes a TBC 340 applied between a base substrate 305 and a layer of absorptive material 315 which underlies a temperature-dependent transparent coating 310. As is known in the art, the thermal barrier coating may itself be several layers (not shown) including a bond coat and a ceramic top coat. A typical TBC material is yttrium-stabilized zirconia (YSZ) applied over Pt(Ni)Al or MnCrAlY. The TBC 340 is optional and any TBC used is preferably very thin to reduce any interference it may have on the optical properties of the component.

It will be appreciated by those of ordinary skill in the art that ceramic materials, such as those found in the substrate or TBC coatings according to exemplary embodiments of the invention, often have rough or irregular surfaces. Accordingly, these materials may serve the dual purpose of a TBC and an absorptive coating.

Components having variable reflectivity according to exemplary embodiments of the invention may advantageously be used as components of gas turbine engines. Components of a gas turbine engine which may advantageously use embodiments of the present invention include any of those components previously discussed and specifically include, by way of example only, combustor casings and linings, flaps and seals, ejectors and any other part cooled by backside airflow in a bypass engine.

It should be appreciated that different locations of the gas turbine engine may operate at different temperatures. Accordingly, the coating may be selected so that the material used has a glass transition temperature that matches the desired transition temperature. Coatings having different glass transition temperatures may be used in different sections of the engine.

Exemplary embodiments of the invention may further be appreciated by way of the following, non-limiting investigation conducted to demonstrate a component having variable reflectivity.

### EXAMPLE

A sample component according to an exemplary embodiment of the invention was produced by obtaining anodized aluminum and covering it with a 20 mil layer of polytetrafluoroethylene (PTFE). At ambient temperature, the glass had approximately 98 % reflectivity, resulting in a large amount of incident radiation being reflected by the sample component. The sample size was 2 inches square. A Nicolet FTIR spectrometer was used to measure the changes in absorption and reflectivity. The temperature was elevated from ambient temperature to about 326°C, above the polymer's Tg. It was determined that above the Tg, the PTFE transitioned to about 3% reflective, resulting in an absorption of about 95% of incident radiation by the sample.

## Claims

1. A component for use in an elevated temperature environment having temperature dependent reflectivity comprising:
a substrate having an optically absorptive surface; and
a coating disposed over and in contact with the optically absorptive surface of the substrate, wherein the coating has a glass transition temperature, the coating having a reflectivity to incident radiation of greater than about 50% below the coating glass transition temperature and a transparency to incident radiation greater than about 50% above the coating glass transition temperature, whereby below the glass transition temperature the component reflects incident radiation and above the glass transition temperature the component absorbs incident radiation and converts it to heat.

2. The component of claim 1 wherein the substrate comprises a metallic material.

3. The component of claim 1 or 2 wherein the substrate comprises a superalloy selected from the group consisting of nickel-based, cobalt-based, iron-based and combinations thereof.

4. The component of claim 1, 2 or 3 wherein the coating comprises a fluoropolymer, preferably tetrafluoroethylene.

5. The component of claim 1, 2 or 3 wherein the coating comprises lithium silicate glass.

6. The component of any preceding claim wherein the coating is at least about 10 mils thick, preferably about 20 mils thick.

7. The component of any preceding claim wherein the coating reflects at least about 90% of incident radiation at a temperature below the glass transition temperature and wherein the coating transmits at least about 90% of incident radiation at and above the coating glass transition temperature.

8. The component of any preceding claim further comprising wherein the substrate having an optically absorptive surface comprises a base substrate and a layer of absorptive material overlying the base substrate.

9. The component of claim 8 wherein the layer of absorptive material has a transparency to incident radiation of less than about 50% below the absorptive material's glass transition temperature and greater than about 50% above the absorptive material's glass transition temperature.

10. The component of any preceding claim wherein the component is a gas turbine engine component selected from the group of combustor casings, combustor linings, flaps, seals and ejectors.
